# EUROPÄISCHE PATENTSCHRIFT

(11) **EP 2 900 576 B1**
(45) Veröffentlichungstag und Bekanntmachung des Hinweises auf die Patenterteilung: **09.12.2015**
(21) Anmeldenummer: 13766484.3
(22) Anmeldetag: 12.09.2013
(51) Int. Cl.: B65G 65/46, B65G 69/18, B65D 88/68, B65D 90/04

(54) **ENTLADESYSTEM FÜR SCHÜTTGUT AUS EINEM TRANSPORTBEHÄLTNIS, INSBESONDERE EINEM CONTAINER**
SYSTEM FOR UNLOADING BULK MATERIAL FROM A TRANSPORT CASE, IN PARTICULAR A CONTAINER
SYSTÈME POUR DÉCHARGER DU MATÉRIAU EN VRAC D' UN RÉCEPTACLE DE TRANSPORT , EN PARTICULIER D' UN CONTENEUR

(30) Priorität: 29.09.2012 DE 102012109292
(43) Veröffentlichungstag der Anmeldung: 05.08.2015
(73) Patentinhaber: Pool Invest GmbH, 56244 Sessenhausen (DE)
(72) Erfinder: HANSES, Christian, 56206 Hilgert (DE); SITTA, Roland, 53567 Asbach (DE)
(74) Vertreter: Aue, Hans-Peter
(86) Internationale Anmeldenummer: PCT/EP2013/068955
(87) Internationale Veröffentlichungsnummer: WO 2014/048764

(56) Entgegenhaltungen:
- WO-A1-80/01793
- DE-A1- 1 556 139
- DE-A1- 4 114 117

## Beschreibung

Die Erfindung bezieht sich auf ein Entladesystem für Schüttgut aus einem Transportbehältnis gemäß dem Oberbegriff des Anspruches 1.

Aus der WO 80/01793 A1 ist ein solches Entladesystem für Schüttgut aus einem Transportbehältnis, insbesondere einem Container, in ein Silo oder einen anderen Füllraum bekannt, aufweisend eine Entladevorrichtung mit einem Grundrahmen, der an dem zu entladenden Transportbehältnis befestigbar ist, wobei am Grundrahmen unter anderem zumindest ein Schneckentrog angeordnet ist. Weiterhin ist zwischen dem Schneckentrog und der Entladeöffnung des Transportbehältnisses eine Staubdichtung angeordnet und an dieses anlegbar.

Seit langem werden Schüttgüter in genormten Behältern transportiert. Dabei wird angestrebt, Schüttgüter in genormte Ladehilfsmittel zu füllen und für den Transport auf Lastkraftwagen, Bahn oder Schiffen zu befördern. Als Ladehilfsmittel sind besonders Container geeignet. Diese Container sind Großraumbehälter zur Lagerung und zum Transport von Gütern, die robust gebaut und genügend widerstandsfähig sind, um wiederholte Verwendung durch mehrere Verkehrs- und Fördermittel ohne Umladen des Inhalts zu ermöglichen. Solche Container existieren in den verschiedensten Größen und sind in der Regel genormt.

Ferner haben die Container Einrichtungen, z.B. Domdeckel, Auslaufklappen und/oder Getreideschieber, zum leichten Umschlagen von einem in das andere Transportbehältnis. Die sogenannten ISO-Standard-Container stellen den bekanntesten und wichtigsten Containertyp dar. Dies sind meist 20-, 30- oder 40-Fuß-Seecontainer sowie Wechselbrücken-Systeme. Mit diesen wird ein großer Teil des Waren- und Stückguthandels abgewickelt. Von Vorteil ist hierbei, dass die Container wegen ihrer genormten Form und Abmessungen mit den verschiedensten Transportmitteln, wie Seeschiffe, Binnenschiffe, Eisenbahnwaggons und Lastkraftwagen, befördert und schnell umgeschlagen werden können.

Häufig wird Schüttgut auch in Silos und Bunkern gelagert, aus denen es entnommen und in solche Container gefüllt werden muss. Typische Schüttgüter sind Baustoffe wie Oberboden, Sand, Kies, Schotter, Zement, andere mineralische Güter wie Erz, Streusalz, und Lebensmittel wie Getreide, Zucker, Speisesalz, Kaffee, Mehl sowie pulverförmige Güter wie Pigmente, Füllstoffe, Granulate, Pellets usw..

Beim Transport unterscheidet man kontinuierlichen, also ununterbrochen fließenden Transport, z.B. Muldengurtförderer und Becherwerke sowie pneumatisch fluide Förderung in Luftströmen, z.B. in Schüttgut-Räumen oder Schüttgut-Bunkern von Schiffen, in Mulden- und Hochbordfahrzeugen, Silowagen, Lastkraftwagen, Eisenbahnwaggons usw., in Säcken, Big Bags, Bulkschiffen, Bulkcontainern und dergleichen als Transportbehältnisse für leichte, stückige Güter oder Schüttgüter.

Container werden in der Regel mit einem Kunststoff-Inliner - sogenannten Containerliner - ausgekleidet, der das Schüttgut enthält. Dieser Containerliner kann unter Vakuum oder Druck gesetzt sein und schützt so das Schüttgut vor durch Eigenfeuchte sich selbst zerstörenden Materialien sowie vor Erhitzung, Erfrierung, Kontaminierung und Parasitenbefall.

Der Verlade- und Transportprozess von Schüttgut ist ein aufwändiges und vielfältiges Verfahren. Dabei kann eine Transport- und Entladeprozedur etwa wie folgt ausgeführt werden:
Das Schüttgut wird beispielsweise auf Loren, z.B. Eisenbahnwagen, verladen. Diese werden zu einem anderen Ort transportiert und umgeschlagen auf ein Losegutschiff. Dieses wiederum fährt an einen anderen Ort, wo das Schüttgut in relativ kleine Säcke gepackt wird. Diese Säcke werden palettiert und mittels Lastkraftwagen, Eisenbahnwaggons usw. zum Endverbraucher wiederum an einen anderen Ort transportiert. Der Endverbraucher möchte das in den Säcken befindliche Schüttgut natürlich wieder z.B. in einem Hochsilo lagern oder es direkt der Weiterverarbeitung zuführen. Dazu werden die Säcke geschlitzt und dem Hochsilo zugeführt.

Ein Nachteil dieser häufig angewendeten Umschläge ist die große Gefahr, das Schüttgut zu verunreinigen oder beim Auspacken Verpackungsbestandteile unter das Schüttgut zu mischen.

Es ist Aufgabe der Erfindung, ein Entladesystem der eingangs genannten Art zu schaffen, mit der der Vorgang des Entladens des Schüttgutes einfacher, kostengünstiger, weniger zeitaufwändig, effizienter und kontaminationsfrei ausgeführt werden kann.

Erfindungsgemäß wird die Aufgabe dadurch gelöst, dass eine Anbindung der Entladevorrichtung an das zu entladende Transportbehältnis derart erfolgt, dass die Staubdichtung der Entladevorrichtung mit einer eine flexible Auslaufeinrichtung aufweisenden separaten einzelnen Wand, ähnlich der Rückwand eines Containerliners, die an einer Öffnung des Transportbehältnisses befestigt ist, staubdicht verbunden ist.

Diese Art der Entladung ist besonders dann gewünscht, wenn das Transportbehältnis selbst keinen Containerliner umfasst.

Gemäß einer weiteren Ausgestaltung der Erfindung ist der Schneckentrog an einer Führung horizontal bewegbar oder kipp- oder schwenkbar angeordnet.

Des Weiteren erfolgt die Befestigung der Entladevorrichtung an das zu entladende Transportbehältnis sowie die Bewegung des Schneckentroges an der Führung pneumatisch, hydraulisch, elektrisch oder mechanisch oder in deren Kombination. Darüber hinaus sind auch die Verriegelungs- und Sicherungssysteme zwischen der Entladevorrichtung und dem zu entladenden Transportbehältnis pneumatisch, hydraulisch, elektrisch oder mechanisch oder in deren Kombination ausgeführt.

Die am Containerliner ausgebildete flexible Auslaufeinrichtung weist eine Öffnungseinrichtung auf, die als Reißleine, Reißverschluss oder äquivalentes wiederverschließbares System ausgebildet ist, wobei diese geöffnet und gegebenenfalls wieder verschlossen werden können. Die manuelle oder auch automatische Öffnungseinrichtung gewährleistet, dass keine Verpackungsbestandteile dem Materialfluss zugeführt werden. Weiterhin kann die flexible Auslaufeinrichtung des Containerliners als doppelwandiger Einweg- oder wiederverwendbarer Hygieneauslauf zur Übergabe des Schüttgutes aus dem Transportbehältnis zur Entladevorrichtung ausgebildet sein.

Weiterhin ist die Staubdichtung als mit Druck beaufschlagte, vorzugsweise aus Hohlgummi, oder sich selbst anpassende Dichtung, vorzugsweise aus Vollgummi, oder vakuumierender Dichtung ausgebildet. Es kann aber auch beispielsweise eine Last-, Klebe-, Starr- oder Schweißdichtung verwendet werden. Diese wird im Bereich der flexiblen Auslaufeinrichtung des Containerliners oder sowie bis über den kompletten Öffnungsbereich des Transportbehältnisses ausgeführt, um selbst in diesem extremen Fall eine emissions- und kontaminationsfreie Entladung zu gewährleisten.

Damit bilden die am Containerliner ausgebildete flexible Auslaufeinrichtung und die zwischen dem Schneckentrog und der Entladeöffnung des Transportbehältnisses angeordnete Staubdichtung während des Entladens eine Doppeldichtung und somit einen hermetische abgeriegelten Übergabebereich des Schüttgutes vom Transportbehältnis zur Entladevorrichtung.

Nach einer weiteren Ausgestaltung des Entladesystems weist die Entladevorrichtung als Austragshilfe eine Dosiereinrichtung auf, die als Zellenradschleuse, Taktschleuse, Saugschuh oder ein anderes Druck-Sendegefäß ausgebildet ist. Diese Dosiereinrichtung verbessert durch Druckausgleich das Fließverhalten des Schüttgutes. Darüber hinaus ermöglicht die Dosiereinrichtung einen Über- oder Unterdruck im Transportbehältnis, um ein dosiertes Entladen des Schüttgutes sicherzustellen, beispielsweise unter Stickstoffatmosphäre. Zum Zweck des Entladens von Schüttgütern entwickelte Belüftungseinrichtung mittels Druckwellen, auch als Bulkshoker bezeichnet, bewirken in Abstimmung mit den Druckausgleich erzeugenden Schleusen einen schlagartigen Druckwechsel im Transportbehältnis, was zu einer Auflockerung und kompletten Restentladung selbst bei nichtgekippten Transportbehältnissen führt.

Des Weiteren ermöglicht der dosierte kontaminationsfreie und emissionsfreie Schüttgutaustrag eine Bearbeitung des auszutragenden Gutes, z. B. durch Mikrowellentrocknung, Begasung, Befeuchtung, Veredelung, Sichtung oder Qualitätsmischung oder Entmischung, Imprägnierung des Schüttgutes, einschließlich Schädlingsbekämpfung.

Die Entladevorrichtung wird zur Entladung direkt an einem Transportbehältnis, beispielsweise einem Standard-Seecontainer, befestigt. Die Anbringung an mobile Frachträume, z.B. einem Lastkraftfahrzeug, ist grundsätzlich unabhängig vom vorhandenen Chassis des Fahrzeuges. Für schwierig zu handhabende Schüttgüter kann die Entladevorrichtung bei einem Kunden vor Ort bleiben oder am Transportbehältnis mitgeführt und zum Entladen von Schüttgut am Transportbehältnis befestigt werden.

Beim Entladen von Schüttgütern, die sehr zur Staubbildung neigen, wie z.B. Pulver, oder Schüttgüter, die schwierige Produkteigenschaften besitzen, wie z.B. Neigung zur Brücken- oder Kettenbildung oder zu einer starken Kompaktierung, ist es notwendig, eine staubdichte Anbindung mit der Entladevorrichtung herzustellen. Dies geschieht möglichst nahe am zu entladenden Transportbehältnis, um das zusätzliche Anbringen der oben beschriebenen Austragshilfen zu erleichtern.

Die Entladevorrichtung kann aber auch separat klappbar oder faltbar in einer Transportvorrichtung, z.B. eine Palettenbox, mitgeführt werden. Es kann auch vorgesehen sein, die Entladevorrichtung z.B. hydraulisch am Heck des Chassis zu befestigen und bei Bedarf an das zu entladende Transportbehältnis, z.B. einen Container oder Lastkraftwagen-Auflieger, zu schwenken. Oder die Entladevorrichtung wird unterhalb am Chassis des Lastkraftwagens mittels Flurförderfahrzeug eingeschoben oder eingehängt.

Für den Straßentransport wird die Entladevorrichtung zur Einhaltung der Straßenverkehrsvorschriften mit einer Beleuchtungsanlage zur Überhangsicherung und einem Unterfahrschutz ausgestattet, die als Sonderausstattungen zum Entladesystem gehören können. Diese können klapp-, steck- oder einschiebbar ausgeführt sein und pneumatisch, hydraulisch, elektrisch oder mechanisch verstellbar sein. Die Anbindung an die elektrische Anlage des Mobilität gewährleistenden Fahrzeuges erfolgt bevorzugt über standardisierte Elektrik-, Pneumatik- oder Hydraulikanschlüsse sowie über duale Systeme.

Bei der Entladevorrichtung kann die gesamte Breite des Transportbehältnisses als Auslaufzone genutzt werden, um eine möglichst große Öffnung zu realisieren und ein gleichmäßiges Nachrutschen des Schüttgutes zu gewährleisten. Unmittelbar mit der Entladung kann das Schüttgut direkt beispielsweise in ein Hochsilo, einen Tiefbunker, in Verpackungseinheiten eingeblasen oder einem Verarbeitungsprozess zugeführt werden. Dabei können erhebliche Kosten und vor allem Zeit beim Entladen des Schüttgutes eingespart werden, insbesondere im Hinblick auf wegfallende Transportwege und Umladevorgänge. Dabei kann das Transportbehältnis, wie beispielsweise Container, Waggon, Auflieger usw. nicht nur das Transportmittel, sondern gleichzeitig auch die Verpackung selbst sein. Die Einsparung an Logistikkosten liegt im Bereich von ca. 45% und die Zeiteinsparung bei ca. 75% gegenüber herkömmlichen Logistikverfahren.

Mit dem Entladesystem können auch die Hygienevorschriften für die pharmazeutische, mineralische und chemische Industrie abgedeckt werden.

Durch Schaugläser an der Entladevorrichtung sowie eine integrierte Wiege- und Durchflußmengenmess-Anlage gewährleistet das Entladesystem einen portionierten Schüttgutaustrag und kann somit an bestehende Verpackungs- oder Produktionsprozesse direkt angeschlossen werden.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Der der Erfindung zugrunde liegende Gedanke wird in der nachfolgenden Beschreibung anhand eines Ausführungsbeispiels, das in den Zeichnungen dargestellt ist, näher beschrieben. Es zeigen:
- Fig. 1: eine Perspektivansicht der Entladevorrichtung, die an einem von Schüttgut zu entladenden Transportbehältnis angebracht ist und
- Fig. 2: eine Perspektivansicht der Rückwand eines Containerliners, der im zu entladenden Transportbehältnis eingesetzt ist.

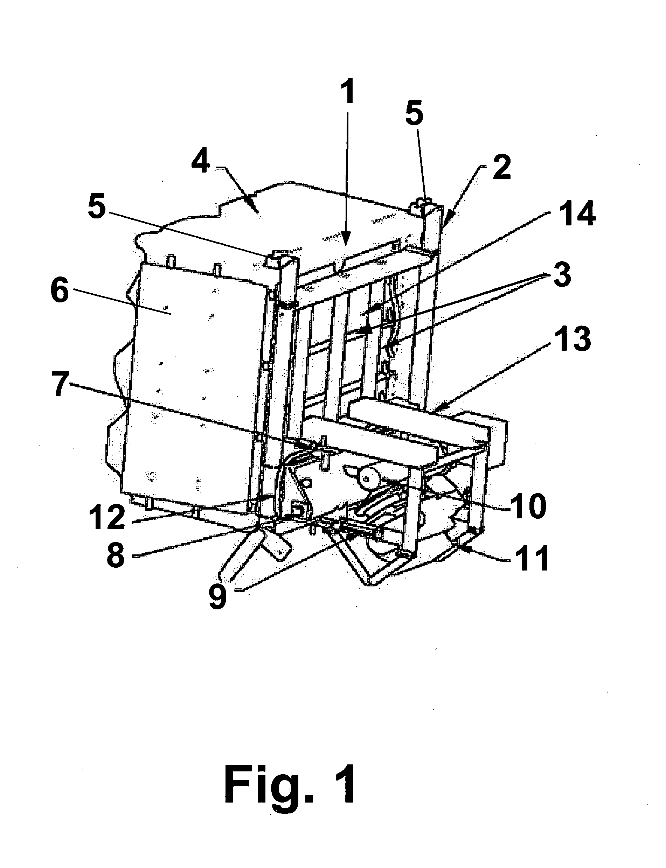

Das nachfolgend beschriebene Entladesystem für Schüttgut umfasst zunächst eine Entladevorrichtung 1 gemäß Fig. 1. Diese besitzt einen Grundrahmen 2, der die Entladevorrichtung 1 trägt. Der Grundrahmen 1 weist optional einen Hilfsrahmen 3 bzw. ein Kreuzsicherungssystem auf und ist an einem zu entladenden Transportbehältnis 4, hier beispielhaft mittels einer Containeranbindung 5 an einem Container, bei dessen geöffneten Türen 6 befestigt. Zum Schutz gegen Verletzungen des Bedieners kann der Hilfsrahmen 3 faltbar, verriegelbar, klapp- oder schwenkbar ausgelegt sein. Der Hilfsrahmen 3 erfüllt aber immer nach dessen Fixierung den Schutz, bei geöffnetem Transportbehältnis 4 den Warenstrom vom Bediener fern zu halten. Der Grundrahmen 2 stellt zugleich auch einen Schutz dar, wenn Schüttgut beim Kippen an der Rückwand des zu entladenden Transportbehältnisses 4 hängen bleibt und sich im späteren Verlauf der Entladung ruckartig in Auslaufrichtung löst.

Am Grundrahmen 2 ist ein zur Entladeöffnung des zu entleerenden Transportbehältnisses 4 horizontal verschiebbarer und verriegelbarer Schneckentrog 7 mit Schneckentrieb 8 vorgesehen, mit dem das Schüttgut aus dem Transportbehältnis 4 entladen wird. Des Weiteren ist am Grundrahmen 2 eine Führung 9 angeordnet, an welcher der Schneckentrog 7 horizontal beweglich angebracht ist.

Am Schneckentrog 7 ist ein Bulkshoker 10 vorgesehen, der die Aufgabe hat, in Abstimmung mit einer nachfolgend genannten Druckausgleich erzeugenden Schleuse, einen schlagartigen Druckwechsel im Transportbehältnis 4 herbeizuführen. Um den Austrag des Schüttgutes, besonders bei sich komprimierenden Materialien, positiv zu beeinflussen, wird das Schüttgut vom Boden des Transportbehältnisses 4 aus belüftet. Dies wird durch Belüften im Puls-, Takt- oder Dauersystem gewährleistet.

Am Grundrahmen 2 ist als Austragshilfe eine Dosiereinrichtung 11 angebracht, die das Fließverhalten des Schüttgutes verbessert. Eine solche Dosiereinrichtung 11 kann beispielsweise eine Zellenradschleuse, eine Taktschleuse, ein Saugschuh, ein Druck-Sendegefäß oder dergleichen sein. Die Dosierung des auszutragenden Schüttgutmaterials erfolgt durch Geschwindigkeitsanpassung des Fördersystems, z. B. mittels der Zellenradschleuse. Ebenso ist eine Freifallentleerung ohne die genannten Fördersysteme möglich. Alle elektrischen und mechanischen Anbauteile 7, 8, 11 sind stufenlos regelbar.

Des Weiteren ist eine Dichtflächenoptimierung über die komplette Breite des zu entladenden Transportmediums in Form einer mit Druck oder Unterdruck beaufschlagten sowie automatisch anpassender Staubdichtung 12 aus Gummimaterial zur emmissions- sowie kontaminationsfreien Anbindung an ein Transportbehältnis 4 vorgesehen. Dabei ist die Staubdichtung 12 zwischen dem Schneckentrog 7 und der Entladeöffnung des Transportbehältnisses 4 angeordnet.

Um das Anbringen der Entladevorrichtung 1 an das zu entladende Transportbehältnis 4 zu erleichtern, sind an dieser Transportaufnahmen 13 für Flurförderfahrzeuge, z.B. Gabelstapler, angebracht, mit der die Entladevorrichtung 1 beispielsweise am Chassis eines Lastkraftwagens, der das zu entladende Transportbehältnis trägt, eingeschoben oder eingehängt werden kann.

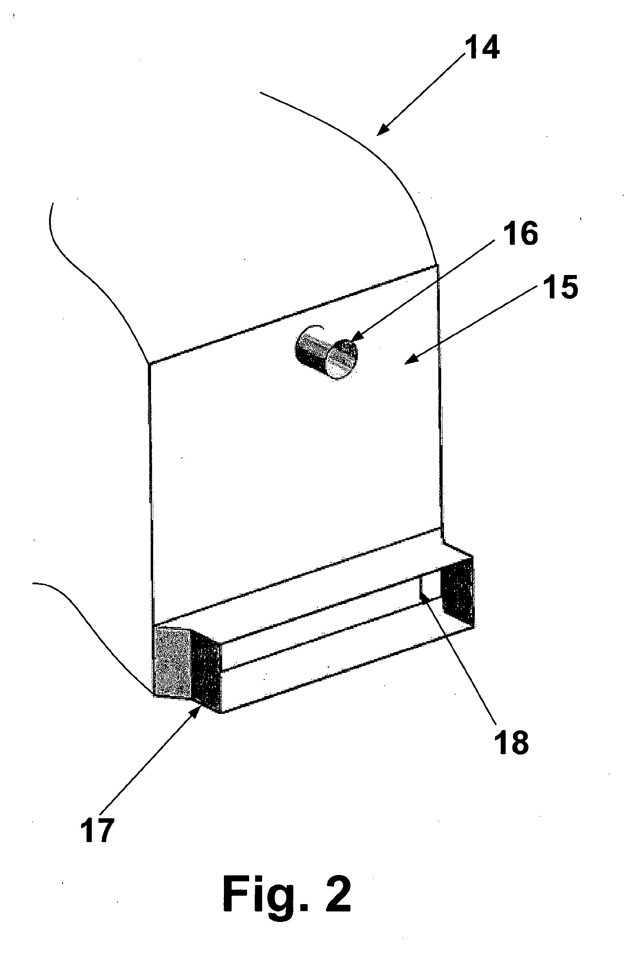

Im Transportbehältnis 4 ist ein mit zu entladendem Schüttgut gefüllter Containerliner 14 aus flexiblem Kunststoff eingesetzt. In Fig. 2 ist insbesondere die Rückwand 15 des Containerliners 14 zu sehen. Diese Rückwand 15 ist erfindungsgemäß separat einzeln an einem keinen Containerliner enthaltenden Transportbehältnis 4 befestigt, ist jedoch nicht nochmals dargestellt.

Die Rückwand 15 des Containerliners 14 besitzt weiterhin an ihrer Oberseite eine Befüllstutzen 16 für Schüttgut. Im unteren Bereich der Rückwand 15 befindet sich eine flexible Auslaufeinrichtung 17. Darüber hinaus besitzt die flexible Auslaufeinrichtung 17 eine Öffnungseinrichtung 18, die als Reißleine ausgebildet ist.

Mit dem Befestigen der Entladevorrichtung 1 am zu entladenden Transportbehältnis 4 wird auch die flexible Auslaufeinrichtung 17 an der Rückwand 15 des Containerliners 14 mit der Staubdichtung 12 der Entladevorrichtung 1 staubdicht verbunden, so dass eine Doppeldichtung entsteht. Ist die Doppeldichtung hergestellt, wird von außen die Öffnungseinrichtung 18, d.h. die Reißleine, gezogen, so dass das Schüttgut zur Entladung kontaminations- und emissionsfrei aus dem Containerliner 14 in den Schneckentrog 7 freigegeben wird.

Der Containerliner 14 wird pneumatisch mit Druck beaufschlagt, damit er sich an die Innenwände des Transportbehältnisses 4 anlegt und der Druck eine Faltenbildung verhindert. Dies ist notwendig, um die Prozesssicherheit der Entladung zu gewährleisten. Das Verhindern der Faltenbildung kann auch durch einen selbstklebenden Containerliner 14 unterstützt werden, der sich an die Innenwände des Transportbehältnisses 4 anlegt.

Das Schüttgut kann nun durch die Auslaufeinrichtung 17 in den Schneckentrog 7 ausfließen. Der Schneckentrieb 8 fördert das Schüttgutmaterial zur Mitte hin. Der Schneckentrieb 8 ermöglicht auch das Zerkleinern z. B. von Klärschlämmen oder gebildeter Klumpen in allen Feststoffgrößen während der Entladung aus dem Transportbehältnis 4. Während der Entladung kann eine Trennung von Fest- und Flüssigkeitsbestandteilen sowie von unterschiedlichen Korngrößen erfolgen. Getrennte Komponenten, nämlich entmischte Korngrößen, können vor oder während der Entladung im Transportbehältnis 4 wieder gemischt oder entmischt werden.

Ist das zu entladende Schüttgut aus dem Containerliner 14 mittels der Entladevorrichtung 1 ausgetragen, wird der Schneckentrog 7 wieder zugefahren und verriegelt.

Nicht näher dargestellte Fluidisierungslanzen können auch nach Öffnung des Containerliners 14 nachträglich in das Schüttgutmaterial eingeschoben werden.

### Liste der Bezugszeichen

- 1: Entladevorrichtung
- 2: Grundrahmen
- 3: Hilfsrahmen bzw. Kreuzsicherungssystem
- 4: Transportbehältnis
- 5: Containeranbindung
- 6: Behältnistür
- 7: Schneckentrog
- 8: Schneckentrieb
- 9: Führung
- 10: Bulkshocker
- 11: Dosiereinrichtung
- 12: Staubdichtung
- 13: Transportaufnahme
- 14: Containerliner
- 15: Rückwand
- 16: Befüllstutzen
- 17: Auslaufeinrichtung
- 18: Öffnungseinrichtung

## Patentansprüche

1. Entladesystem für Schüttgut aus einem Transportbehältnis (4), insbesondere einem Container, in ein Silo oder einen anderen Füllraum, aufweisend eine Entladevorrichtung (1) mit einem Grundrahmen (2) und gegebenenfalls einen Hilfsrahmen (3), wobei der Grundrahmen (2) an dem zu entladenden Transportbehältnis (4) befestigbar ist, und am Grundrahmen (2) ein zur Entladeöffnung des Transportbehältnisses (4) horizontal verschiebbarer und verriegelbarer Schneckentrog (7) mit Schneckentrieb (8) angeordnet ist, wobei am Schneckentrog (7) eine Dosiereinrichtung (11) zur Dosierung des auszutragenden Schüttgutes angeordnet ist, und zwischen dem Schneckentrog (7) und der Entladeöffnung des Transportbehältnisses (4) eine Staubdichtung (12) angeordnet ist, **dadurch gekennzeichnet, dass** eine Anbindung der Entladevorrichtung (1) an das zu entladende Transportbehältnis (4) derart erfolgt, dass die Staubdichtung (12) der Entladevorrichtung (1) mit einer eine flexible Auslaufeinrichtung (17) aufweisenden separaten einzelnen Wand (15), ähnlich der Rückwand eines Containerliners (14), die an einer Öffnung des Transportbehältnisses (4) befestigt ist, staubdicht verbunden ist.

2. Entladesystem nach Anspruch 1, **dadurch gekennzeichnet, dass** der Schneckentrog (7) an einer Führung (9) horizontal bewegbar oder kipp- oder schwenkbar angeordnet ist.

3. Entladesystem nach Anspruch 2, **dadurch gekennzeichnet, dass** die Befestigung der Entladevorrichtung (1) an das zu entladende Transportbehältnis (4) sowie die Bewegung des Schneckentroges (7) an der Führung (9) pneumatisch, hydraulisch, elektrisch oder mechanisch oder in deren Kombination erfolgt.

4. Entladesystem nach Anspruch 1, **dadurch gekennzeichnet, dass** die am Containerliner (14) ausgebildete flexible Auslaufeinrichtung (17) eine Öffnungseinrichtung (18) aufweist, die als Reißleine, Reißverschluss oder äquivalentes wiederverschließbares System ausgebildet ist.

5. Entladesystem nach Anspruch 1, **dadurch gekennzeichnet, dass** die Staubdichtung (12) als mit Druck beaufschlagte, vorzugsweise aus Hohlgummi, oder sich selbst anpassende Dichtung, vorzugsweise aus Vollgummi, oder vakuumierende Dichtung ausgebildet ist.

6. Entladesystem nach Anspruch 1, **dadurch gekennzeichnet, dass** die Dosiereinrichtung (11) zur Dosierung des auszutragenden Schüttgutes als Austragshilfe als Zellenradschleuse, Taktschleuse, Saugschuh oder ein anderes Druck-Sendegefäß ausgebildet ist.

7. Entladesystem nach Anspruch 1, **dadurch gekennzeichnet, dass** am Grundrahmen (2) Transportaufnahmen (13) für Flurförderfahrzeuge angeordnet sind.

## Claims

1. An unloading system for bulk material from a transport container (4), in particular a container, into a silo or into another hopper, having an unloading device (1) with a basic frame (2) and possibly an auxiliary frame (3), whereas the basic frame (2) can be fixed to the transport container (4) to be unloaded, and a screw trough (7) with worm drive (8), a trough which can be shifted and locked horizontally with respect to the unloading opening of the transport container (4) is provided on the basic frame (2), whereas a dosing device (11) is arranged on the screw trough (7) for dosing the bulk material to be delivered, and a dust seal (12) is arranged between the screw trough (7) and the unloading opening of the transport container (4), **characterised in that** the unloading device (1) is connected to the transport container (4) to be unloaded in such a way that the dust seal (12) of the unloading device (1) is linked in a dust-proof manner to a separate single wall (15) having a flexible discharge device (17), similar to the rear wall of a container liner (14) which is fixed to an opening of the transport container (4).

2. The unloading system according to claim 1, **characterised in that** the screw trough (7) is arranged to be horizontally movable or tiltable or pivotable with respect to a guide (9).

3. The unloading system according to claim 2, **characterised in that** the unloading device (1) is fixed to the transport container (4) to be unloaded and the movement of the screw trough (7) is performed pneumatically, hydraulically, electrically or mechanically or in any combination with respect to the guide (9).

4. The unloading system according to claim 1, **characterised in that** the flexible discharge device (17) formed on the container liner (14) includes an opening device (18) which is designed as a rip cord, a zip fastener or an equivalent reclosable system.

5. The unloading system according to claim 1, **characterised in that** the dust seal (12) is designed as a pressurised gasket, preferably made of hollow rubber or self-adapting gasket, preferably made of solid rubber or a depressurising gasket.

6. The unloading system according to claim 1, **characterised in that** the dosing device (11) for dosing the bulk material to be delivered, is designed for easier delivery as a rotary feeder, a double-flap batching valve, a suction shoe or another pressurised source vessel.

7. The unloading system according to claim 1, **characterised in that** transport brackets (13) for forklift trucks are arranged on the basic frame (2).

## Revendications

1. Système de déchargement pour matériau en vrac à partir d'un container de transport (4), en particulier un container, dans un silo ou dans une autre trémie, présentant un dispositif de déchargement (1) avec un châssis de base (2) et éventuellement, un châssis auxiliaire (3), tandis que le châssis de base (2) peut être fixé sur le container de transport (4) pour être déchargé, et une auge à vis (7) par entraînement par vis sans fin (8), une auge qui peut être déplacée et verrouillée à l'horizontale par rapport à l'ouverture de déchargement du container de transport (4) est équipée sur le châssis de base (2), tandis qu'un dispositif de dosage (11) est disposé sur l'auge à vis (7) pour doser le matériau en vrac à délivrer, et un joint anti-poussière (12) est disposé entre l'auge à vis (7) et l'ouverture de déchargement du container de transport (4), **caractérisé en ce que** le dispositif de déchargement (1) est relié au container de transport (4) pour être déchargé de telle façon que le joint anti-poussière (12) du dispositif de déchargement (1) est relié d'une manière étanche à la poussière à une paroi unique et séparée (15) présentant un dispositif d'évacuation souple (17), similaire à la paroi arrière d'un revêtement de container (14) qui est fixée à une ouverture du container de transport (4).

2. Système de déchargement selon la revendication 1, **caractérisé en ce que** l'auge à vis (7) est agencée pour être mobile, orientable ou pivotable horizontalement par rapport à un guide (9).

3. Système de déchargement selon la revendication 2, **caractérisé en ce que** le dispositif de déchargement (1) est fixé sur le container de transport (4) pour être déchargé et le mouvement de l'auge à vis (7) est effectué de manière pneumatique, hydraulique, électrique ou mécanique ou selon toute combinaison par rapport au guide (9).

4. Système de déchargement selon la revendication 1, **caractérisé en ce que** le dispositif d'évacuation souple (17) formé sur le revêtement de container (14) comprend un dispositif d'ouverture (18) qui est conçu sous la forme d'une poignée d'ouverture, d'une fermeture à glissière ou d'un système équivalent pouvant être refermé.

5. Système de déchargement selon la revendication 1, **caractérisé en ce que** le joint anti-poussière (12) est conçu sous la forme d'un joint d'étanchéité sous pression, de préférence fabriqué en caoutchouc creux, ou un joint auto-adaptatif, de préférence fabriqué en caoutchouc plein, ou un joint de dépressurisation.

6. Système de déchargement selon la revendication 1, **caractérisé en ce que** le dispositif de dosage (11) pour doser le matériau en vrac à délivrer, est conçu comme un distributeur rotatif, une vanne de dosage à double clapet, un sabot d'aspiration ou un autre récipient sous pression, pour une faciliter la livraison.

7. Système de déchargement selon la revendication 1, **caractérisé en ce que** des supports de transport (13) pour chariots élévateurs sont disposés sur le châssis de base (2).
